# EUROPÄISCHE PATENTANMELDUNG

(11) **EP 1 271 935 A1**
(43) Veröffentlichungstag der Anmeldung: **02.01.2003**
(21) Anmeldenummer: 01115867.2
(22) Anmeldetag: 29.06.2001
(51) Int. Cl.: H04N 5/235

(54) **Vorrichtung zum Aufnehmen von digitalen Bildern mit zwei gleichzeitig angesteuerten elektronischen Bildsensoren**

(71) Anmelder: Kappa opto-electronics GmbH, 37130 Gleichen (DE)
(72) Erfinder: Koch, Andreas, 37083 Göttingen (DE); Haese, Jürgen, 37130 Gleichen (DE)
(74) Vertreter: Patentanwälte Rehberg + Hüppe

(57) **Zusammenfassung**

Bei einer Vorrichtung (1) zum Aufnehmen von digitalen Bildern mit mindestens zwei gleichzeitig angesteuerten elektronischen Bildsensoren (5, 6) sind die beiden Bildsensoren (5, 6) so hinter einem gemeinsamen Objektiv (2) angeordnet, dass ihre Anordnungen derselben Blickrichtung durch das Objektiv (2) entsprechen. Dabei unterscheiden sich effektive Helligkeitsaussteuerungen der beiden Bildsensoren (5, 6) um mehr als einen Faktor 2.

## Beschreibung

Die Erfindung bezieht sich auf eine Vorrichtung zum Aufnehmen von digitalen Bildern mit zwei gleichzeitig angesteuerten elektronischen Bildsensoren, die die Merkmalen des Oberbegriffs des Patentanspruchs 1 aufweist.

Das spezielle Gebiet der Erfindung sind Kamerasysteme zur Verkehrskontrolle, die im Sprachgebrauch aus als Blitz- oder Starenkästen bezeichnet werden. Kamerasysteme zur Verkehrskontrolle arbeiten bisher ausschließlich mit Nassfilmtechnik. Vorrichtungen zum Aufnehmen von digitalen Bildern, d. h. Digitalkameras, kommen dagegen kaum zum Einsatz, weil der erforderliche Helligkeitsdynamikumfang beim Aufnehmen von Bildern kaum erreicht wird. Während die Bildsensoren heutiger Digitalkameras, die für eine Anwendung in Kamerasystemen zur Verkehrskontrolle notwenige Ortsauflösung aufweisen, ist der Umfang der bei der Aufnahme eines Bilds erfassbaren Grauwerte zu gering. Hintergrund für die Notwendigkeit eines sehr großen Helligkeitsdynamikumfang bei den Bildaufnahmen von Kamerasystemen zur Verkehrskontrolle ist, dass die Rechtssprechung neben der für sich genommen einfachen Erfassung des Kennzeichens auch die Möglichkeit einer Indentifikation des Fahrers durch die aufgenommenen Bilder verlangt. Man kann eine Digitalkamera zwar ohne weiteres auch so aussteuern, dass der Fahrzeuginnenraum gut ausgeleuchtet wird, dann ist aber das Kennzeichen des Fahrzeugs übersteuert und nicht mehr lesbar. Der Helligkeitsdynamikbereich zwischen dunklem Fahrzeuginnenraum und hellem reflektierendem Kennzeichen lässt sich mit heutigen Bildsensoren von Digitalkameras, die für Anwendungen in Kamerasystemen zur Verkehrskontrolle in Frage kommen, nicht erfassen. Es gibt zwar Spezialsensoren, die bezüglich des Helligkeitsdynamikbereichs hinreichend leistungsfähig wären, sie sind jedoch extrem kostspielig und kommen daher für eine wirtschaftliche Lösung des Aufbaus von Kamerasystemen zur Verkehrskontrolle nicht in Betracht.

Denkbar wäre, das Problem der Aussteuerung durch das Aufnehmen zweiter aufeinanderfolgender Bilder mit unterschiedlicher Aussteuerung zu lösen. Zwischen diesen beiden Aufnahmen vergingen jedoch mindestens 100 ms. Dies ist die Auslesezeit für die erste Aufnahme aus dem Bildsensor bei einem Standardbildsensor. In dieser Zeit ist ein Fahrzeug mit 100 km/h ca. 2,8 m weitergefahren und hat damit den Bildausschnitt bereits verlassen. Hinzu kämen rechtliche Probleme bei der Zuordnung der beiden nacheinander aufgenommenen Bilder, da man auf dem einen nur das Kennzeichen und auf dem anderen nur den Fahrzeuginnenraum erkennen würde. Gleiches gilt für die gleichzeitige Aufnahme von zwei Bildern mit zwei getrennten, unterschiedlich ausgesteuerten Digitalkameras.

Eine weitere denkbare Möglichkeit ist es, Teilen des Bildsensors einer Digitalkamera ein Filter zur Abschwächung der einfallenden Lichtintensität vorzuschalten, und somit den Bereich des Kennzeichens, der in der Regel im unteren Bilddrittel liegt, lokal abzuschwächen. Bei einer starren Geometrie besteht im Falle einer solchen Anordnung aber die Gefahr, zuviel oder zuwenig des Bildinhalts abzuschwächen. Zwar liegt der Bereich des Kennzeichens in den allermeisten Fällen im unteren Bildteil, doch kann die Grenze des unteren Bildteils nach oben von Anwendung zu Anwendung stark variieren und sie verläuft auch nicht immer waagerecht, sondern kann auch irgendeinen Schrägverlauf durch das Blickfeld des Bildsensors aufweisen. Gute Ergebnisse sind von der Anmelderin jedoch mit einem horizontal zweigeteilten Filter erzielt worden, dessen Lage parallel zu dem Bildsensor frei einstellbar ist. Der obere Teil hat 100% Durchlass, während der untere Teil die einfallenden Lichtintensitäten auf typischerweise zwischen 1% und 50% Durchgangsintensität dämpft. Dadurch wird der untere Bildbereich pauschal abgedunkelt. Da sich in der Nähe des Kennzeichens jedoch keine weiteren wichtigen Bildinformationen befinden, kann diese Einschränkung in Kauf genommen werden. Um diese Vorrichtung an verschiedene Aufnahmesituationen anzupassen, ist das Filter so vor dem Bildsensor gelagert, dass das Filter bezüglich der Trennlinie zwischen den beiden Bereichen mittels Einstellschrauben gegenüber dem Sensor justiert werden kann. Die Trennlinie kann in ihrer Höhe verstellt und gekippt werden. Der abgeschwächte Bildbereich kann somit ideal auf eine quer zu dem zu kontrollierenden Verkehr verlaufende Messlinie, beispielsweise eine Haltelinie an einer Ampel, angepasst werden.

Eine Vorrichtung zum Aufnehmen von digitalen Bildern mit zwei gleichzeitig angesteuerten elektronischen Bildsensoren nach dem Oberbegriff des Patentanspruchs 1 ist zur Verbesserung der Ortsauflösung einer Digitalkamera bekannt. Hierzu werden die Pixel der beiden Bildsensoren nicht in äquivalenten Positionen hinter dem gemeinsamen Objektiv angeordnet, sondern sie werden seitlich zueinander versetzt, so dass die Pixel des jeweils einen Bildsensors in den Zwischenräumen der Pixel des jeweils anderen Bildsensors aktiv sind. Bei dieser Anordnung sind beide Bildsensoren identisch ausgesteuert.

Eine prinzipiell identische Aussteuerung mehrerer gleichzeitig angesteuerter Bildsensoren hinter einem gemeinsamen Objektiv ist auch bei einer Farbdigitalkamera gegeben, bei der die einzelnen Farben durch unterschiedliche hinter Strahlteilern angeordnete Bildsensoren oder durch einen Farbbildsensor, der mehrere monochromatische Bildsensoren zusammenfasst, registriert werden.

Vorrichtung zum Aufnehmen von digitalen Bildern mit mindestens zwei gleichzeitig angesteuerten elektronischen Bildsensoren, wobei die beiden Bildsensoren hinter einem gemeinsamen Objektiv angeordnet sind, sind auch bei Stereodigitalkameras bekannt. Dabei sind die beiden Bildsensoren wieder jeweils identisch ausgesteuert.

Der Erfindung liegt die Aufgabe zugrunde, eine Vorrichtung zum Aufnehmen von digitalen Bildern mit mindestens zwei gleichzeitig angesteuerten elektronischen Bildsensoren, die die Merkmale des Oberbegriffs des Patentanspruchs 1 aufweist und zur Anwendung in einem Kamerasystem zur Verkehrskontrolle ohne das Hervorrufen rechtlicher Probleme geeignet ist, aufzuzeigen.

Erfindungsgemäß wird diese Aufgabe durch die Vorrichtung zum Aufnehmen von digitalen Bildern mit mindestens zwei gleichzeitig angesteuerten elektrischen Bildsensoren mit den Merkmalen des Patentanspruchs 1 gelöst. Bevorzugte Ausführungsformen dieser Vorrichtung sind in den Unteransprüchen 2 bis 10 beschrieben.

Bei der neuen Vorrichtung unterscheiden sich die effektiven Helligkeitsaussteuerungen der beiden Bildsensoren um mehr als einen Faktor 2. Dies bedeutet, dass identische einfallende Lichtintensitäten bei dem einen Bildsensor zu einem nicht einmal halb so großen Ausgangssignal führen, wie bei dem anderen Bildsensor. Mit anderen Worten ist dieser eine Bildsensor weniger hoch ausgesteuert als der andere Bildsensor und wird daher auch weniger schnell übersteuert. Gleichzeitig nehmen beide Bildsensoren aufgrund ihrer gleichen Blickrichtung durch das Objektiv dasselbe Bild auf. So kann eine Wiedergabe dieses Bilds auf Teilen des Bildsignals von beiden Bildsensoren basiert werden, wobei lokal immer für eine optimale Aussteuerung gesorgt wird. Wenn dies unmittelbar aus den Ausgangssignalen der Bildsensoren erfolgt, kann eigentlich nicht davon gesprochen werden, dass zwei Bilder getrennt aufgenommen werden. Vielmehr wird ein einziges Bild aufgenommen, wobei der Helligkeitsdynamikbereich durch Verwendung von zwei Bildsensoren vergrößert wird. Durch die Abstufung der Aussteuerung der beiden Bildsensoren um mehr als einen Faktor 2 wird der Helligkeitsdynamikbereich auch mehr als verzweifacht.

Bevorzugt ist eine Abstufung der effektiven Helligkeitsaussteuerung der beiden Bildsensoren um einen Faktor 5 bis 100. Günstig erweist sich ein Faktor 10 für die Abstufung der effektiven Helligkeitsaussteuerungen. Dies entspricht einer optimalen Aussteuerung des Fahrzeuginnenraums einerseits und des Kennzeichens eines Fahrzeugs andererseits bei Kamerasystemen zur Verkehrskontrolle, die sich etwa um den Faktor 10 unterscheiden.

Die beiden Bildsensoren der neuen Vorrichtung sind vorzugsweise monochromatische Bildsensoren, um den technischen Aufwand zu begrenzen und um die hohe Ortsauflösung von zu günstigen Kosten verfügbaren monochromatischen Bildsensoren zu nutzen.

Es ist aber auch denkbar, als einzelne monochromatische Bildsensoren die monochromatischen Teile eines Farbbildsensors zu verwenden und zwar sowohl die Teile eines Farbbildsensors, bei dem die einzelnen Bildsensoren für die einzelnen Farben hinter mindestens einem Strahlteiler angeordnet sind, als auch eines Farbbildsensors, bei dem die einzelnen monochromatischen Bildsensoren zu einem einzigen Panel zusammengefasst sind.

Um herkömmliche monochromatische Bildsensoren mit hoher Ortsauflösung zu verwenden, sind diese an zwei Ausgängen eines Strahlteilers anzuordnen, der zwischen die Bildsensoren und das gemeinsame Objektiv zwischengeschaltet ist.

Der Bildsensor kann direkt dafür sorgen, dass die einfallenden Lichtintensitäten in dem gewünschten Verhältnis der Aussteuerungen auf die beiden Bildsensoren verteilt werden. So können zwei identische und elektrisch identisch angesteuerte Bildsensoren verwendet werden. Dies ist auch ganz allgemein möglich, wenn vor einem der Bildsensoren ein die einfallende Lichtintensität abschwächendes Filter angeordnet ist.

Bei zwei monochromatischen Bildsensoren, die für unterschiedliche Farben ausgelegt sind, können die gewünschten unterschiedlichen Helligkeitsaussteuerungen auch dadurch erreicht werden, dass die Bilder unter Beleuchtung mit Licht bestimmter Zusammensetzung aufgenommen werden, auf das die beiden monochromatischen Bildsensoren unterschiedlich stark ansprechen.

Vorzugsweise ist eine gemeinsame Steuerung vorgesehen, die Bildsignale aus den beiden Bildsensoren ausliest und die die Bildsignale von den beiden Bildsignalen in digitaler Form miteinander kombiniert, um die digitalen Bilder zu erzeugen. Beispielsweise kann die gemeinsame Steuerung die Bildsignale aus den beiden Bildsensoren wechselweise auslesen. D. h., während das jeweilige Bildsignal aus dem einen Bildsensor ausgelesen wird, wird das zugehörige Bildsignal in dem anderen Bildsensor noch zwischengespeichert, bis es im nächsten Schritt von der Steuerung ausgelesen wird. In der Steuerung werden die Bildsignale von den beiden Bildsensoren in digitaler Form miteinander kombiniert. Hierzu müssen die Bildsignale in der Regel zunächst digitalisiert werden. Die Kombination erfolgt so, dass die digitalen Bilder bereichsweise auf den Bildsignalen des einen Bildsensors oder des anderen Bildsensors basieren.

So kann die Steuerung beispielsweise alle Bereiche der digitalen Bilder auf Basis des Bildsignals von dem höher ausgesteuerten Bildsensor erzeugen, soweit dieses Bildsignal nicht übersteuert ist. Ob das Bildsignal in einem Bereich übersteuert ist, kann vor oder nach seiner Digitalisierung festgestellt werden. In der Regel ist es sinnvoll, nicht nur die unmittelbar übersteuerten Pixel durch das Bildsignal von dem niedriger ausgesteuerten Bildsensor zu ersetzen, sondern auch definierte Umgebung um diese übersteuerten Pixel. Im Ergebnis wird beispielsweise der gesamte Bereich eines reflektierenden Nummernschilds, in dem das Bildsignal des höher ausgesteuerten Bildsensors pixelweise übersteuert ist, durch das Bildsignal von dem niedriger ausgesteuerten Bildsensor ersetzt.

Es ist auch umgekehrt möglich, von dem Bildsignal des niedrigerer ausgesteuerten Bildsensors auszugehen und alle Bereiche, in denen eine vorgegebene Helligkeitsdynamik nicht erreicht wird, durch die entsprechenden Bereiche des Bildsignals von dem höher ausgesteuerten Bildsensor zu ersetzen. Die zuvor beschriebenen Vorgehensweise ist aber nach derzeitigem Stand bevorzugt.

Idealerweise sind die Bildsensoren in pixelweise äquivalenten Positionen hinter dem gemeinsamen Objektiv angeordnet, so dass bei Feststellung der Adressen der übersteuerten Pixel und ihrer Umgebung direkt die Adressen der aus dem Bildsignal des niedrigerer ausgesteuerten Bildsensors zu übernehmenden Bereiche feststehen.

Die Erfindung wird im folgenden anhand eines Ausführungsbeispiels näher erläutert und beschrieben, dabei zeigt:

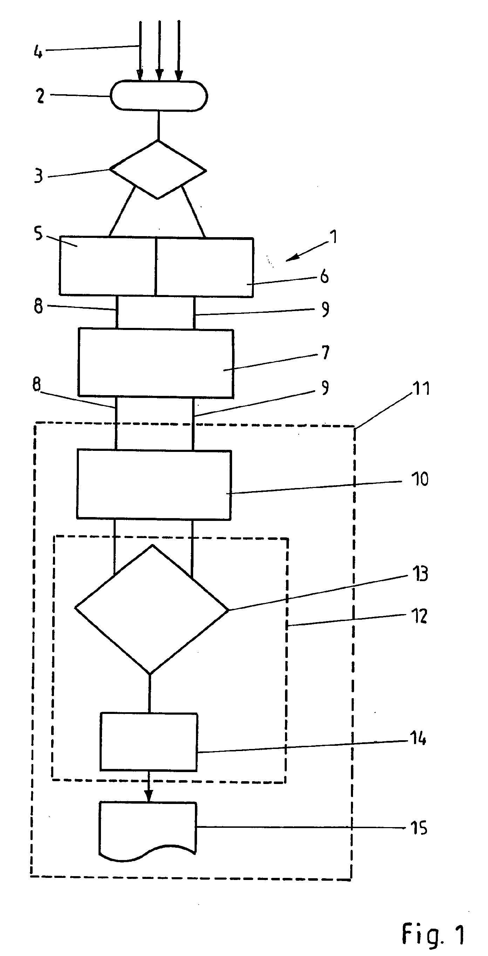

- Fig. 1: ein Blockdiagramm zum Aufbau der neuen Vorrichtung und Ihrer Funktion.

Die in Fig. 1 dargestellte Vorrichtung 1 weist ein Objektiv 2 auf, hinter dem ein Strahlteiler 3 angeordnet ist, der auf das Objektiv 2 einfallendes Licht 4 im Verhältnis 10 zu 1 auf zwei Bildsensoren 5 und 6 verteilt. Die Bildsensoren 5 und 6 sind identisch ausgebildet und mit identischer Blickrichtung durch das Objektiv 2 angeordnet. Sie unterscheiden sich nur durch die einfallenden Lichtintensitäten, die durch den Strahlteiler 3 ungleich verteilt werden. Die beiden Bildsensoren 5 und 6 werden durch eine Kamerasteuerung 7 synchron zur Belichtung angesteuert. Das Auslesen der Bildsignale 8 und 9 durch die Kamerasteuerung 7 erfolgt nacheinander. In der Kamerasteuerung 7 werden die Bildsignale digitalisiert und in digitaler Form an eine Schnittstelle 10 einer Computersteuerung 11 weitergegeben. In der Computersteuerung 11 bildet ein Treiber 12 nach folgendem Algorithmus ein Bild aus den Bildsignalen 8 und 9 aus. Eine Auswahlschaltung 13 wählt für das Bild alle Bereiche des Bildsignals 8 von dem stärker belichteten, d. h. höher ausgesteuerten Bildsensor 5 aus, die nicht übersteuert sind und in deren Umgebung einer definierten Anzahl von n Pixeln sich ebenfalls kein übersteuertes Pixel befindet. Alle anderen Bereiche, d. h. von Pixeln, die in dem Bildsignal 8 übersteuert sind und deren Umgebungen, werden aus dem Bildsignal 9 von dem Bildsensor 6 ausgebildet. Das so erzeugte Bild wird in einem Codierer 14 verschlüsselt und signiert. Der resultierende Datensatz 15 ist ohne Sicherheitsbedenken für die Übertragung an eine hier nicht dargestellte Zentraleinheit geeignet, beispielsweise auch über das Internet. In der Zentraleinheit kann der Datensatz 15 decodiert werden. Dann kann das Bild ausgedruckt werden. In Teilbereichen des Bilds kann weiterhin die vorhandene Helligkeitsdynamik zusätzlich gegenüber anderen Teilbereichen gespreizt werden, um die in dem Bild sichtbare Graustufenauflösung weiter zu verbessern.

Die Vorrichtung 1 gemäß Fig. 1 ist insbesondere als Kamerasystem für die Verkehrskontrolle geeignet. Hier sorgt der stärker ausgesteuerte Bildsensor 5 dafür, dass ein Fahrer im Fahrzeuginnenraum eines Fahrzeugs zu erkennen ist, während der weniger stark ausgesteuerte Bildsensor 6 dafür sorgt, dass das reflektierende Nummernschild in demselben Bild gut lesbar ist.

### BEZUGSZEICHENLISTE

- 1 -: Vorrichtung
- 2 -: Objektiv
- 3 -: Strahlteiler
- 4 -: Licht
- 5 -: Bildsensor
- 6 -: Bildsensor
- 7 -: Kamerasteuerung
- 8 -: Bildsignal
- 9 -: Bildsignal
- 10 -: Schnittstelle

- 11 -: Auswertesteuerung
- 12 -: Treiber
- 13 -: Auswählschaltung
- 14 -: Codierer
- 15 -: Datensatz

## Patentansprüche

1. Vorrichtung zum Aufnehmen von digitalen Bildern mit mindestens zwei gleichzeitig angesteuerten elektronischen Bildsensoren, wobei die beiden Bildsensoren so hinter einem gemeinsamen Objektiv angeordnet sind, dass ihre Anordnungen derselben Blickrichtung durch das Objektiv entsprechen, **dadurch gekennzeichnet, dass** sich effektive Helligkeitsaussteuerungen der beiden Bildsensoren (5, 6) um mehr als einen Faktor 2 unterscheiden.

2. Vorrichtung nach Anspruch 1, **dadurch gekennzeichnet, dass** sich die effektiven Helligkeitsaussteuerungen der beiden Bildsensoren (5, 6) um einen Faktor 5 bis 100 unterscheiden.

3. Vorrichtung nach einem der Ansprüche 1 und 2, **dadurch gekennzeichnet, dass** die beiden Bildsensoren (5, 6) monochromatische Bildsensoren sind.

4. Vorrichtung nach Anspruch 3, **dadurch gekennzeichnet, dass** die beiden monochromatischen Bildsensoren Teil eines Farbbildsensors sind.

5. Vorrichtung nach Anspruch 3, **dadurch gekennzeichnet, dass** die beiden Bildsensoren (5, 6) an zwei Ausgängen eines Strahlteilers (3) angeordnet sind, der zwischen die Bildsensoren (5, 6) und das gemeinsame Objektiv (3) zwischengeschaltet ist.

6. Vorrichtung nach einem der Ansprüche 1 bis 5, **dadurch gekennzeichnet, dass** die beiden Bildsensoren (5, 6) gleich sind und dass vor einem der Bildsensoren (5, 6) ein die einfallende Lichtintensität abschwächendes Filter angeordnet ist.

7. Vorrichtung nach einem der Ansprüche 1 bis 6, **dadurch gekennzeichnet, dass** eine gemeinsame Steuerung (7, 11) vorgesehen ist, die Bildsignale (8, 9) aus den beiden Bildsensoren ausliest und die die Bildsignale (8, 9) von den beiden Bildsensoren (5, 6) in digitaler Form miteinander kombiniert, um die digitalen Bilder zu erzeugen, die bereichsweise auf den Bildsignalen (8, 9) des einen Bildsensors (5) oder des anderen Bildsensors (6) basieren.

8. Vorrichtung nach Anspruch 7, **dadurch gekennzeichnet, dass** die Steuerung (7, 11) alle Bereiche der digitalen Bilder auf Basis des Bildsignals (8) von dem höher ausgesteuerten Bildsensor (5) erzeugt, in denen dieses Bildsignal (8) nicht übersteuert ist.

9. Vorrichtung nach Anspruch 8, **dadurch gekennzeichnet, dass** die Steuerung die Bereiche aller übersteuerten Pixel des höher ausgesteuerten Bildsensors (5) und einer definierten Umgebung um diese Pixel auf Basis des Bildsignals (8) von dem niedriger ausgesteuerten Bildsensor (6) erzeugt.

10. Vorrichtung nach einem der Ansprüche 1 bis 8, **dadurch gekennzeichnet, dass** die Bildsensoren (5, 6) in pixelweise äquivalenten Positionen hinter dem gemeinsamen Objektiv (2) angeordnet sind.
